# EUROPEAN PATENT SPECIFICATION

(11) **EP 2 395 807 B1**
(45) Date of publication and mention of the grant of the patent: **03.07.2019**
(21) Application number: 10788688.9
(22) Date of filing: 19.04.2010
(51) Int. Cl.: H04M 1/725

(54) **APPLICATION FUNCTION AUTOMATIC ACTIVATION METHOD AND CORRESPONDING TERMINAL**
VERFAHREN ZUR AUTOMATISCHEN AKTIVIERUNG VON ANWENDUNGSFUNKTIONEN UND ENTSPRECHENDES ENDGERÄT
PROCÉDÉ D'ACTIVATION AUTOMATIQUE DE FONCTION D'APPLICATIONS ET TERMINAL CORRESPONDANT

(30) Priority: 05.11.2009 CN 200910211243
(43) Date of publication of application: 14.12.2011
(73) Proprietor: ZTE Corporation, Shenzhen, Guangdong 518057 (CN)
(72) Inventor: HUANG, Lianfang, Shenzhen Guangdong 518057 (CN)
(74) Representative: Novagraaf Technologies
(86) International application number: PCT/CN2010/071871
(87) International publication number: WO 2010/145292

(56) References cited:
- CN-A- 1 620 039
- CN-A- 1 675 930
- CN-A- 101 179 787
- US-A1- 2001 003 835
- US-A1- 2009 132 197

## Description

### Filed of the Invention

The present invention relates to a mobile communication terminal, and particularly to an automatic activation method of an application function and a corresponding terminal.

### Background of the Invention

Along with the popularization of cell phone, an alarm clock of the cell phone increasingly replaces an alarm clock in conventional form, and plays more significant role of reminding people of something in their daily life. Today, the pace of living is continuously increased, and therefore this function becomes particularly important. The function of alarm clock of the cell phone is absolutely necessary especially for students and office workers who have relatively strong time concept.

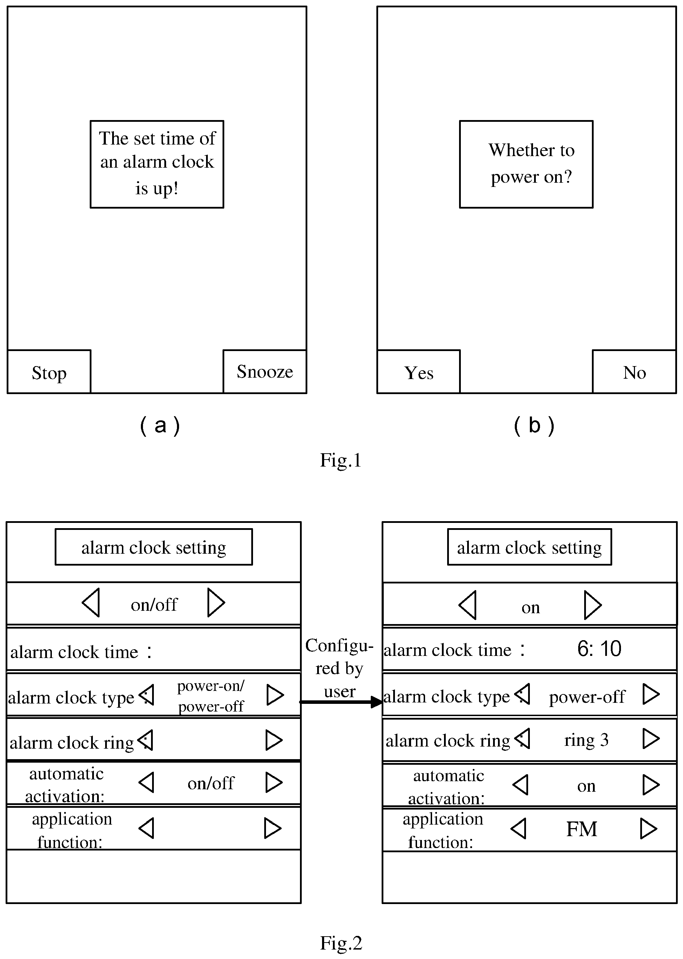

The existing cell phone has been provided with various functions of "power-on alarm" and "power-off alarm" that a user can select. With respect to the "power-on alarm", the alarm clock can take effect only in the case of the cell phone being power-on. With respect to the "power-off alarm", the alarm clock can take effect no matter whether the cell pone is power-on or power-off. However, when the time is up for making an alarm, the alarm clock of the existing cell phone merely has a few operation mode, i.e., stop mode, snooze mode (stopping the alarm, or restarting the alarm a short period of time later), and whether to power on, as shown in Figs 1(a) and 1(b). The application of the alarm clock of the cell phone is relatively limited, especially in the case of the power-off alarm, if the user hopes to immediately listen to music or broadcasting or check the mailbox of the cell phone and browse website etc. after being alarmed to get up when the time is up for making an alarm on the cell phone, he/she has to wait a period of time for the cell phone to be powered on and then enters a menu to activate a corresponding application function module, which takes a long time and is inconvenient in operation.

The cell phone terminal available in the current market only has an automatic power-on or power-off function, that is, when the time preset by a user is up, the automatic power-on or power-off function is automatically activated. The technical solution of automatic activation of an application function of a cell phone is involved in patent documents, such as patent application CN200810042725.1 which discloses a TD cell phone stream media program method and a scheduling system thereof, wherein a stream media program can be automatically activated to be played. Also, patent application CN 200710171562.2 discloses a technical solution of automatically activating the periodical transmission of information. However, all of these technical solutions only aim at a certain function module, and a user can not manually change or select the function module that can be automatically activated. Additionally, although some patents ever proposed technical solutions for automatic activation of a certain function module in the power-off state, these technical solutions merely aim at the automatic activation of a certain function module, but can not achieve the automatic activation, in the power-off state, of arbitrary function module which is preset by a user.

US2009/132197 and US2001/003835 provide the related technical solutions; however, the above mentioned problem still remains unsolved.

### Summary of the Invention

The technical problem to be solved by the present invention is to provide an automatic activation method of an application function, and a terminal, which are capable of automatically activating an application function in the terminal which is selected by a user.

In order to solve the above problem, the present invention provides an automatic activation method of an application function in a terminal, comprising:
the terminal setting an automatic activation interface, and a user setting, via the automatic activation interface, an application function which needs to be automatically activated and a triggering condition for an automatic activation of the application function; and
when the terminal being in the power-off state, the terminal sending, when the triggering condition for the automatic activation of the application function is satisfied, a starting command to the automatic activation interface to activate the application function.

The above method further comprises:
the automatic activation interface comprises a starting interface;
the method further comprises: writing a calling flow from a stand-by interface to an internal module of an application module to be automatically activated in the starting interface in advance; and
the step of the terminal sending the starting command to the automatic activation interface to activate the application function comprises: the terminal sending the starting command to the starting interface, and triggering an execution of the calling flow through the starting command, so as to activate the corresponding application function.

The above method further comprises:
the automatic activation interface comprises a condition trigger setting interface; the user sets the application function which needs to be automatically activated and the triggering condition for the automatic activation of the application function via the condition trigger setting interface; and the triggering condition for the automatic activation comprises whether an automatic activation function is on and whether a triggering event occurs.

The above method further comprises: the trigging event comprises one or more of the followings: a set time is up, and the application function of the terminal is running or is ended.

The above method further comprises: during the process of the terminal sending the starting command to the automatic activation interface to activate the application function, if there is an intervention action from the user, the automatic activation and/or running of the application function is stopped.

The present invention also provides a terminal capable of achieving the automatic activation of application function. The terminal comprises an automatic activation interface setting module and an auxiliary processing unit which are connected with each other, and further comprising one or more application function modules capable of being automatically activated, wherein:
the automatic activation interface setting module is configured to receive an application function which needs to be automatically activated and a triggering condition for an automatic activation of the application function set by the user, and activate the corresponding application function when receiving a starting command; and
the auxiliary processing unit is configured to send, when the terminal being in the power-off state, and the triggering condition for the automatic activation of the application function is satisfied, the starting command to the automatic activation interface setting module, so as to activate the corresponding application function.

The above terminal further comprises: the automatic activation interface setting module comprises a starting interface;
the auxiliary processing unit is configured to send, when the triggering condition for the automatic activation of the application function is satisfied, the starting command to the starting interface; and
the starting interface is configured to be written therein a calling flow which is from a stand-by interface to an internal module of an application module to be automatically activated in advance, and trigger, when receiving the starting command, an execution of the calling flow to activate the corresponding application function.

The above terminal further comprises: the automatic activation interface setting module comprises a condition trigger setting interface; and
the condition trigger setting interface is configured to be used by the user to set the application function which needs to be automatically activated and the triggering condition for the automatic activation, wherein the triggering condition for the automatic activation comprises whether an automatic activation function is on and whether a triggering event occurs.

The above terminal further comprises: the trigging event comprises one or more of the followings: a set time is up, and the application function of the terminal is running or is ended.

The above terminal further comprises: the auxiliary processing unit is further configured to stop, during the process of activating the corresponding application function through the starting command and if there is an intervention action from the user, the automatic activation and/or running of the application function.

In the automatic activation method of an application function and the terminal provided by the present invention, a user presets an application function and a triggering condition for the automatic activation of the application function, such that when the triggering condition is satisfied, the terminal is made to skip over the menu to directly start the application function which is set by the user. In such a way, user operation is simplified and the user is facilitated to use the corresponding terminal service. Moreover, in virtue of the present invention, arbitrary application function which is set by a user can be automatically activated in the power-off state.

The more humanized solution of automatically starting the terminal application function, which is proposed by the present invention, allows a user to save time while sufficiently enjoying entertainment.

### Brief Description of the Drawings

Fig.1 is a reminding interface and an interface for selecting whether to power on when the time is up for making an alarm on the terminal in the prior art;
Fig.2 is a setting interface for terminal alarm clock triggering and application function according to the present invention;
Fig.3 is a flowchart of an application example according to the preset invention in which an application function is automatically activated by a power-off alarm;
Fig.4 is a flowchart of an application example according to the preset invention in which an application function is automatically activated by a power-on alarm; and
Fig.5 is a structural block diagram of a terminal which can automatically activate an application function according to the present invention.

### Detailed Description of the Preferable Embodiments

The present invention provides an automatic activation method of an application function and a terminal, which are based on the following idea: a user sets in advance an application function which needs to be automatically activated and a triggering condition for an automatic activation of the application function in a condition trigger setting interface, such that when the triggering condition is satisfied, the application function is correspondingly activated and started according to the setting of the user.

Hereinafter, the technical solution of the present invention will be described in detail in conjunction with the drawings and preferable embodiments. The embodiments illustrated below are merely used for describing and explaining the present invention, rather than limiting the technical solution of the present invention.

The automatic activation method of an application function in a terminal provided in the present invention includes:
the terminal sets an automatic activation interface, and a user sets an application function which needs to be automatically activated and a triggering condition for the automatic activation of the application function via the automatic activation interface; and
when the triggering condition for the automatic activation of the application function is satisfied, the terminal sends a starting command to the automatic activation interface to activate the application function.

In the above, the automatic activation interface includes a starting interface and a condition trigger setting interface.

A calling flow from a stand-by interface to an internal module of an application module to be automatically activated is written in the starting interface in advance; and the terminal sends, when the automatic activation condition is satisfied, a starting command to the starting interface, and triggers the execution of the calling flow through the starting command, so as to activate the corresponding application function.

In the above, the user sets the application function which needs to be automatically activated and the triggering condition for the automatic activation of the application function via the condition trigger setting interface, wherein the triggering condition for the automatic activation includes whether an automatic activation function is on and whether a triggering event occurs. The trigging event includes one or more of the following situations: a set time is up, and the application function of the terminal is running or is ended.

In the above, during the process that the terminal sends the starting command to the automatic activation interface to activate the application function, if there is an intervention action from the user, the automatic activation and/or running of the application function is stopped.

The embodiment of the automatic activation method of an application function according to the present invention includes:
an automatic activation interface is set for each application function of the terminal, wherein the automatic activation interface includes a starting interface and a condition trigger setting interface;
when a triggering condition for the automatic activation of the application function which is set in the condition trigger setting interface by the user is satisfied, the terminal sends a starting command to the starting interface to activate the application function which is set by the user.

In the above, the starting interface is used for the terminal to output a starting command to this interface when the triggering condition is satisfied, so as to call the corresponding application program. In order to directly call a certain application module of the terminal when the triggering condition is satisfied, the calling flow from the stand-by interface to individual internal module of individual application module is written in the starting interface in advance. When the triggering condition is satisfied, the terminal triggers the execution of the corresponding calling flow through the starting command, so as to activate the corresponding application function. Taking the procedure of calling an FM after the ring of the alarm clock is finished as an example, it firstly enters a main menu and opens a multimedia module, and then opens the application module of the FM function to call the application module of the FM function, and the calling procedure of these modules can be written into the codes of the starting interface in advance.

The condition trigger setting interface is used by the user to set the application function and the triggering condition for the automatic activation of the application function. The triggering condition for the automatic activation of the application function includes whether an automatic activation function is on and whether a triggering event occurs.

In the above, that whether the automatic activation function is on is implemented by, for example, one automatic activation on/off item, or one choose-one-button for choosing whether to perform the automatic activation. The triggering event includes, for example, the time set by the user (for example, the alarm clock time) is up, or the terminal is powered on, or other application function is running or is ended, and so on.

As shown in Fig 2, there is provided a specific embodiment of the condition trigger setting interface according to the present invention, i.e., a cell phone alarm clock function setting interface and the actual setting of a user. It can be seen from this cell phone alarm clock function setting interface that, besides the existing setting items of a cell phone alarm clock, an "automatic activation" on/off item and an application function item are added. A user can set the "automatic activation" on/off item as "on" and at the same time select the application function to be automatically activated to be "FM", that is, frequency modulation broadcasting application function. Of course, the user also can select, in the application function item, any one of "audio player", "TV", "cell phone bond", "mailbox", "internet" and other application functions of the cell phone, and moreover can select more than one of the above application functions by combination of programming. The "alarm clock time" and the "alarm clock type" set by the user are actually set as the triggering event of the automatic activation of the application function, that is, when the event in which the cell phone terminal starts the alarm clock in the power-off state to ring at 6:10AM occurs, the triggering condition of powering on and automatically activating the frequency modulation broadcasting function are satisfied.

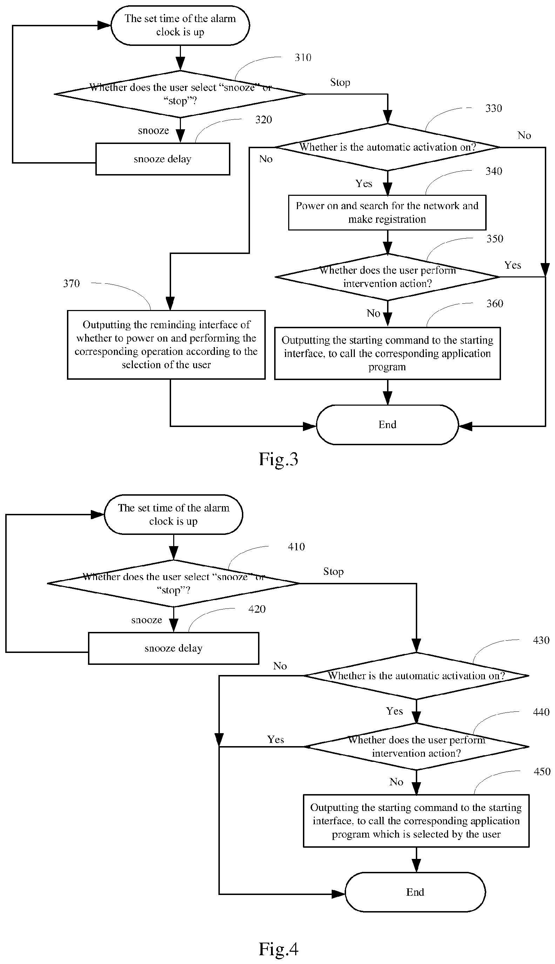

Hereinafter, an application example of a power-off alarm clock is used for further explaining how to automatically activate an application function when the triggering condition is satisfied in an embodiment of the automatic activation method of the application function. As shown in Fig 3, when the power-off alarm clock time set by the user is up, the flow performed by the cell phone terminal after outputting the alarm clock interface and the time-up reminding interface includes the steps as follows.

Step 310: when determining that the user selects "snooze" in the clock time-up reminding interface (as shown in Fig 1(a)), it performs the step 320, and if the user selects "stop", it performs the step 330.

Step 320: it performs the time delay of snooze, and when the delayed time is up, outputs again the ring and the clock time-up reminding interface, and repeats the step 310.

Step 330: it is judged whether the automatic activation function is on, that is, whether the "automatic activation" on/off item in the cell phone alarm clock function setting interface is set as "on", wherein if yes, it performs the step 340, otherwise, it performs the step 370.

Step 340: the cell phone is powered on, searches the network and performs registration.

Step 350: it continues to determine whether the user has any intervention action, wherein if yes, the flow is ended, otherwise, it continues to perform the next step.

When the user performs other operation after the cell phone is powered on, for example, the user performs the dialing and calling operation, the terminal can perform the corresponding prompt of whether to terminate the activation of the current application function, for example, "whether to terminate the activation of the current FM function?". In the case that the user confirms the termination, it will terminate the posterior flow of calling the application program.

Step 360: it outputs a starting command to the starting interface to call the corresponding application program (that is, executing the program of the application function which is selected by the user), for example, call the "FM" application program, and the flow is ended.

Step 370: it outputs the interface of reminding whether to power on (as shown in Fig 1(b)), and performs the corresponding operation according to the selection of the user, and the flow is ended.

This step is the same as the existing power-off alarm clock function, wherein if the user selects "yes" (i.e., selects to power on), the terminal performs the power-on operation and then enters the stand-by state.

It can be concluded from the above application embodiment that when the triggering condition that the power-off alarm clock time is up is satisfied, the two application functions of "power-on" and "FM" are automatically activated. In other words, by means of setting the power-off alarm clock function by the user, when the triggering condition is satisfied, the present invention can automatically enters the power-on status and activates other application function, so as to solve the problem in the prior art that the automatic activation of an application function can not be achieved in the power-off state.

Hereinafter, an application example of a power-on alarm clock is used for further explaining how to automatically activate an application function when the triggering condition is satisfied in an embodiment of the automatic activation method of the application function. As shown in Fig 4, for example, when the power-on alarm clock time set by the user is up, the flow performed by the cell phone terminal after outputting the alarm clock interface and the time-up reminding interface includes the steps as follows.

Step 410: when determining that the user selects "snooze" in the clock time-up reminding interface (as shown in Fig 1(a)), it performs the step 420, and if the user selects "stop", it performs the step 430.

Step 420: it performs the time delay of snooze, and when the delayed time is up, outputs again the ring and the clock time-up reminding interface, and repeats the step 410.

Step 430: it is judged whether the automatic activation function is on, that is, whether the "automatic activation" on/off item in the cell phone alarm clock function setting interface is set as "on", wherein if yes, it performs the step 440, otherwise, the flow is ended.

Step 440: it continues to determine whether the user has any intervention action, wherein if yes, the flow is ended, otherwise, it continues to perform the next step.

Step 450: it outputs a starting command to the starting interface to call the corresponding application program, for example, call the application program of "cell phone TV", and the flow is ended.

It can be concluded from the above application embodiment that when the triggering condition that the power-on alarm clock time is up is satisfied, one application function which is selected by the user is automatically activated. It can be imagined that the user can start, immediately after getting up, the entertainment or business work of a new day, for example, the "cell phone bond", the "cell phone mail box", or the "cell phone internet" and so on which are automatically activated. In such a way, these businessmen, who are always busy in daily life, can obtain the most desired information in first time, or common people can gently enter normal life and work status from languorous status of sleep through the pleasing singing and music.

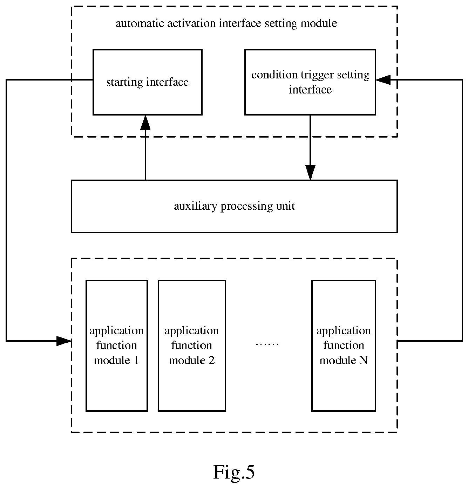

As shown in Fig 5, there is provided a structure of an embodiment of a cell phone terminal according to the present invention which corresponds to the above method embodiment. The terminal includes an automatic activation interface setting module and an auxiliary processing unit which are connected with each other, and further includes plural application function modules which can be automatically activated (the application function module 1∼ the application function module N).

In the above, the automatic activation interface setting module is used for setting a starting interface for the terminal and providing a condition triggering setting interface for the user; and the automatic activation interface setting module is configured for receiving an application function which needs to be automatically activated and a triggering condition for the automatic activation of the application function set by the user, and activating, when receiving the starting command, the corresponding application function.

The auxiliary processing unit is used for outputting, when the triggering condition for automatic activation of the application function which is set by the user in the condition trigger setting interface is satisfied, the starting command to the starting interface so as to activate the application function which is set by the user.

In the above, the starting interface is used for the auxiliary processing unit to output to the starting interface the starting command for activating the corresponding application function when the triggering condition is satisfied; and triggering, when receiving the starting command, the execution of the calling flow, so as to activate the corresponding application function.

In the above, the condition trigger setting interface is used for the user to set the application function which needs to be automatically activated and the triggering event for the automatic activation of the application function, wherein the triggering condition for the automatic activation of the application function includes whether the automatic activation function is on and whether the triggering event occurs. Whether the automatic activation function is on can be embodied through, for example, an automatic activation on/off item, or one choose-one button for choosing whether to perform the automatic activation. The triggering event includes, for example, the alarm clock time set by the user is up, or the terminal is powered on, or other application function is running or is ended, and so on.

In the above, the auxiliary processing unit is further configured to stop, during activating the corresponding application function through the starting command and if there is an intervention action from the user, the automatic activation and/or running of the application function.

One preferable embodiment of the condition trigger setting interface, as shown in Fig 2, is a terminal alarm clock function setting interface and the actual setting of the user, which are mentioned above, therefore being omitted herein.

The technical solution of the present invention is described in detail by means of the above embodiments of the present invention. For those skilled in the art, various changes and modifications can be made to the present invention.

### Industrial Applicability

In the automatic activation method of an application function and the terminal provided by the present invention, a user presets an application function and a triggering condition for the automatic activation of the application function, such that when the triggering condition is satisfied, the terminal is made to skip over the menu to directly start the application function which is set by the user. In such a way, user operation is simplified and the user is facilitated to use the corresponding terminal service. Moreover, in virtue of the present invention, arbitrary application function which is set by a user can be automatically activated in the power-off state. The more humanized solution of automatically starting the terminal application function, which is proposed by the present invention, allows a user to save time while sufficiently enjoying entertainment.

## Claims

1. An automatic activation method of an application function in a terminal, comprising:
the terminal setting an automatic activation interface, and a user setting, via the automatic activation interface, an application function which needs to be automatically activated and a triggering condition for an automatic activation of the application function; and
when the terminal being in a power-off state, the terminal sending, when the triggering condition for the automatic activation of the application function is satisfied, a starting command to the automatic activation interface to activate the application function.

2. The method according to Claim 1, wherein
the automatic activation interface comprises a starting interface;
the method further comprises: writing a calling flow from a stand-by interface to an internal module of an application module to be automatically activated in the starting interface in advance; and
the step of the terminal sending the starting command to the automatic activation interface to activate the application function comprises: the terminal sending the starting command to the starting interface, and triggering an execution of the calling flow through the starting command, so as to activate the corresponding application function.

3. The method according to Claim 1, wherein
the automatic activation interface comprises a condition trigger setting interface; the user sets the application function which needs to be automatically activated and the triggering condition for the automatic activation of the application function via the condition trigger setting interface; and the triggering condition for the automatic activation comprises whether an automatic activation function is on and whether a triggering event occurs.

4. The method according to Claim 3, wherein the trigging event comprises one or more of the followings: a set time is up, and the application function of the terminal is running or is ended.

5. The method according Claim 1, 2, 3, or 4, wherein the method further comprises:
during the process of the terminal sending the starting command to the automatic activation interface to activate the application function, if there is an intervention action from the user, the automatic activation and/or running of the application function is stopped.

6. A terminal capable of achieving an automatic activation of an application function, comprising an automatic activation interface setting module and an auxiliary processing unit which are connected with each other, and further comprising one or more application function modules capable of being automatically activated, wherein:
the automatic activation interface setting module is configured to receive an application function which needs to be automatically activated and a triggering condition for an automatic activation of the application function set by the user, and activate the corresponding application function when receiving a starting command; and
the auxiliary processing unit is configured to send, when the terminal being in a power-off state and the triggering condition for the automatic activation of the application function is satisfied, the starting command to the automatic activation interface setting module, so as to activate the corresponding application function.

7. The terminal according to Claim 6, wherein
the automatic activation interface setting module comprises a starting interface;
the auxiliary processing unit is configured to send, when the triggering condition for the automatic activation of the application function is satisfied, the starting command to the starting interface; and
the starting interface is configured to be written therein a calling flow which is from a stand-by interface to an internal module of an application module to be automatically activated in advance, and trigger, when receiving the starting command, an execution of the calling flow to activate the corresponding application function.

8. The terminal according to Claim 6, wherein
the automatic activation interface setting module comprises a condition trigger setting interface; and
the condition trigger setting interface is configured to be used by the user to set the application function which needs to be automatically activated and the triggering condition for the automatic activation, wherein the triggering condition for the automatic activation comprises whether an automatic activation function is on and whether a triggering event occurs.

9. The terminal according to Claim 8, wherein the trigging event comprises one or more of the followings: a set time is up, and the application function of the terminal is running or is ended.

10. The terminal according to Claim 6, 7, 8, or 9, wherein the auxiliary processing unit is further configured to stop, during the process of activating the corresponding application function through the starting command and if there is an intervention action from the user, the automatic activation and/or running of the application function.

## Patentansprüche

1. Automatisches Aktivierungsverfahren einer Anwendungsfunktion in einem Endgerät, umfassend:
Einstellen, durch das Endgerät, einer automatischen Aktivierungsschnittstelle, und Einstellen, durch einen Benutzer über die automatische Aktivierungsschnittstelle, einer Anwendungsfunktion, die automatisch aktiviert werden muss, und einer Auslösebedingung für eine automatische Aktivierung der Anwendungsfunktion; und
wenn sich das Endgerät in einem ausgeschalteten Zustand befindet, Senden, durch das Endgerät, eines Startbefehls an die automatische Aktivierungsschnittstelle, um die Anwendungsfunktion zu aktivieren, wenn die Auslösebedingung für die automatische Aktivierung der Anwendungsfunktion erfüllt ist.

2. Verfahren nach Anspruch 1, wobei
die automatische Aktivierungsschnittstelle eine Startschnittstelle umfasst;
das Verfahren weiter umfasst: Schreiben eines Aufrufablaufs von einer Standby-Schnittstelle zu einem internen Modul eines Anwendungsmoduls, der automatisch aktiviert werden soll, im Voraus in die Startschnittstelle; und
der Schritt des Sendens, durch das Endgerät, des Startbefehls an die automatische Aktivierungsschnittstelle, um die Anwendungsfunktion zu aktivieren, umfasst: Senden, durch das Endgerät, des Startbefehls an die Startschnittstelle, und Auslösen einer Ausführung des Aufrufablaufs durch den Startbefehl, um die entsprechende Anwendungsfunktion zu aktivieren.

3. Verfahren nach Anspruch 1, wobei
die automatische Aktivierungsschnittstelle eine Bedingungsauslöser-Einstellschnittstelle umfasst; der Benutzer die Anwendungsfunktion, die automatisch aktiviert werden muss, und die Auslösebedingung für die automatische Aktivierung der Anwendungsfunktion über die Bedingungsauslöser-Einstellschnittstelle einstellt; und die Auslösebedingung für die automatische Aktivierung umfasst, ob eine automatische Aktivierungsfunktion eingeschaltet ist und ob ein Auslöseereignis auftritt.

4. Verfahren nach Anspruch 3, wobei das Auslöseereignis eines oder mehrere der Folgenden umfasst: eine eingestellte Zeit ist abgelaufen, und die Anwendungsfunktion des Endgeräts wird ausgeführt oder wird beendet.

5. Verfahren nach Anspruch 1, 2, 3 oder 4, wobei das Verfahren weiter umfasst:
wenn es während des Prozesses des Sendens, durch das Endgerät, des Startbefehls an die automatische Aktivierungsschnittstelle, um die Anwendungsfunktion zu aktivieren, zu einer Eingriffsaktion seitens des Benutzers kommt, wird die automatische Aktivierung und/oder Ausführung der Anwendungsfunktion gestoppt.

6. Endgerät, das eine automatische Aktivierung einer Anwendungsfunktion erzielen kann, umfassend ein Einstellmodul für eine automatische Aktivierungsschnittstelle und eine zusätzliche Verarbeitungseinheit, die miteinander verbunden sind, und weiter ein oder mehrere Anwendungsfunktionsmodule umfassend, die automatisch aktiviert werden können, wobei:
das Einstellmodul für die automatische Aktivierungsschnittstelle so konfiguriert ist, dass es eine Anwendungsfunktion, die automatisch aktiviert werden muss, und eine Auslösebedingung für eine automatische Aktivierung der Anwendungsfunktion, die vom Benutzer eingestellt werden, empfängt, und bei Empfangen eines Startbefehls die entsprechende Anwendungsfunktion aktiviert; und
die zusätzliche Verarbeitungseinheit so konfiguriert ist, dass sie den Startbefehl an das Einstellmodul für die automatische Aktivierungsschnittstelle sendet, um die entsprechende Anwendungsfunktion zu aktivieren, wenn sich das Endgerät in einem ausgeschalteten Zustand befindet und die Auslösebedingung für die automatische Aktivierung der Anwendungsfunktion erfüllt ist.

7. Endgerät nach Anspruch 6, wobei
das Einstellmodul für die automatische Aktivierungsschnittstelle eine Startschnittstelle umfasst;
die zusätzliche Verarbeitungseinheit so konfiguriert ist, dass sie den Startbefehl an die Startschnittstelle sendet, wenn die Auslösebedingung für die automatische Aktivierung der Anwendungsfunktion erfüllt ist; und
die Startschnittstelle so konfiguriert ist, dass im Voraus ein Aufrufablauf, der automatisch aktiviert werden soll, er von einer Standby-Schnittstelle zu einem internen Modul eines Anwendungsmoduls geht, in sie geschrieben wird, und bei Empfangen des Startbefehls eine Ausführung des Aufrufablaufs auslöst, um die entsprechende Anwendungsfunktion zu aktivieren.

8. Endgerät nach Anspruch 6, wobei
das Einstellmodul für die automatische Aktivierungsschnittstelle eine Bedingungsauslöser-Einstellschnittstelle umfasst; und
die Bedingungsauslöser-Einstellschnittstelle so konfiguriert ist, dass sie vom Benutzer dazu verwendet wird, die Anwendungsfunktion, die automatisch aktiviert werden muss, und die Auslösebedingung für die automatische Aktivierung einzustellen, wobei die Auslösebedingung für die automatische Aktivierung umfasst, ob eine automatische Aktivierungsfunktion eingeschaltet ist und ob ein Auslöseereignis auftritt.

9. Endgerät nach Anspruch 8, wobei das Auslöseereignis eines oder mehrere der Folgenden umfasst: eine eingestellte Zeit ist abgelaufen, und die Anwendungsfunktion des Endgeräts wird ausgeführt oder wird beendet.

10. Endgerät nach Anspruch 6, 7, 8 oder 9, wobei die zusätzliche Verarbeitungseinheit weiter so konfiguriert ist, dass sie während des Prozesses des Aktivierens der entsprechenden Anwendungsfunktion durch den Startbefehl, und wenn es zu einer Eingriffsaktion seitens des Benutzers kommt, die automatische Aktivierung und/oder Ausführung der Anwendungsfunktion stoppt.

## Revendications

1. Procédé d'activation automatique d'une fonction d'application dans un terminal, comprenant :
le réglage par le terminal d'une interface d'activation automatique et le réglage par un utilisateur, via l'interface d'activation automatique, d'une fonction d'application qui doit être activée automatiquement et d'une condition de déclenchement pour une activation automatique de la fonction d'application ; et
quand le terminal est dans un état hors tension, l'envoi par le terminal, quand la condition de déclenchement pour l'activation automatique de la fonction d'application est satisfaite, d'une commande de démarrage à l'interface d'activation automatique pour activer la fonction d'application.

2. Procédé selon la revendication 1, dans lequel
l'interface d'activation automatique comprend une interface de démarrage ;
le procédé comprend en outre : l'écriture d'un flux d'appel d'une interface de réserve à un module interne d'un module d'application pour être activé automatiquement à l'avance dans l'interface de démarrage ; et
l'étape d'envoi par le terminal de la commande de démarrage à l'interface d'activation automatique pour activer la fonction d'application comprend : l'envoi de la commande de démarrage à l'interface de démarrage et le déclenchement d'une exécution du flux d'appel par le biais de la commande de démarrage de manière à activer la fonction d'application correspondante, par le terminal.

3. Procédé selon la revendication 1, dans lequel
l'interface d'activation automatique comprend une interface de réglage de déclenchement de condition ; l'utilisateur règle la fonction d'application qui doit être activée automatiquement et la condition de déclenchement pour l'activation automatique de la fonction d'application via l'interface de réglage de déclenchement de condition ; et la condition de déclenchement pour l'activation automatique comprend le fait qu'une fonction d'activation automatique soit activée et le fait qu'un événement de déclenchement se produise.

4. Procédé selon la revendication 3, dans lequel l'événement de déclenchement comprend un ou plusieurs parmi les suivants : un temps réglé est écoulé, et la fonction d'application du terminal est en cours d'exécution ou est terminée.

5. Procédé selon la revendication 1, 2, 3 ou 4, dans lequel le procédé comprend en outre :
durant le processus d'envoi par le terminal de la commande de démarrage à l'interface d'activation automatique pour activer la fonction d'application, s'il existe une action d'intervention provenant de l'utilisateur, l'activation automatique et/ou l'exécution de la fonction d'application est interrompue.

6. Terminal capable d'obtenir une activation automatique d'une fonction d'application, comprenant un module de réglage d'interface d'activation automatique et une unité de traitement auxiliaire qui sont connectés l'un à l'autre, et comprenant en outre un ou plusieurs modules de fonction d'application capables d'être activés automatiquement, dans lequel :
le module de réglage d'interface d'activation automatique est configuré pour recevoir une fonction d'application qui doit être activée automatiquement et une condition de déclenchement pour une activation automatique de la fonction d'application réglée par l'utilisateur, et activer la fonction d'application correspondante lors de la réception d'une commande de démarrage ; et
l'unité de traitement auxiliaire est configurée pour envoyer, quand le terminal est dans un état hors tension et la condition de déclenchement pour l'activation automatique de la fonction d'application est satisfaite, la commande de démarrage au module de réglage d'interface d'activation automatique, de manière à activer la fonction d'application correspondante.

7. Terminal selon la revendication 6, dans lequel
le module de réglage d'interface d'activation automatique comprend une interface de démarrage ;
l'unité de traitement auxiliaire est configurée pour envoyer, quand la condition de déclenchement pour l'activation automatique de la fonction d'application est satisfaite, la commande de démarrage à l'interface de démarrage ; et
l'interface de démarrage est configurée pour être écrite à l'intérieur avec un flux d'appel qui est d'une interface de réserve à un module interne d'un module d'application pour être activée automatiquement à l'avance dans l'interface de démarrage, et déclencher, lors de la réception de la commande de démarrage, une exécution du flux d'appel pour activer la fonction d'application correspondante.

8. Terminal selon la revendication 6, dans lequel
le module de réglage d'interface d'activation automatique comprend une interface de réglage de déclenchement de condition ; et
l'interface de réglage de déclenchement de condition est configurée pour être utilisée par l'utilisateur pour régler la fonction d'application qui doit être activée automatiquement et la condition de déclenchement pour l'activation automatique, dans lequel la condition de déclenchement pour l'activation automatique comprend le fait qu'une fonction d'activation automatique soit activée et le fait qu'un événement de déclenchement se produise.

9. Terminal selon la revendication 8, dans lequel l'événement de déclenchement comprend un ou plusieurs parmi les suivants : un temps réglé est écoulé, et la fonction d'application du terminal est en cours d'exécution ou est terminée.

10. Terminal selon la revendication 6, 7, 8 ou 9, dans lequel l'unité de traitement auxiliaire est configurée en outre pour interrompre, durant le processus d'activation de la fonction d'application correspondante par le biais de la commande de démarrage et s'il existe une action d'intervention provenant de l'utilisateur, l'activation automatique et/ou l'exécution de la fonction d'application.
